# EUROPÄISCHE PATENTANMELDUNG

(11) **EP 3 485 771 A1**
(43) Veröffentlichungstag der Anmeldung: **22.05.2019**
(21) Anmeldenummer: 18206512.8
(22) Anmeldetag: 15.11.2018
(51) Int. Cl.: A47J 37/12

(54) **EINSATZ FÜR EINE FRITTEUSE**

(30) Priorität: 17.11.2017 AT 509622017
(71) Anmelder: Oosten, Harry, 8552 Eibiswald (AT)
(72) Erfinder: Oosten, Harry, 8552 Eibiswald (AT); Oosten, Evelyne, 8552 Eibiswald (AT)
(74) Vertreter: Gibler & Poth Patentanwälte KG

(57) **Zusammenfassung**

Bei einem Einsatz (1) für eine Fritteuse mit zumindest einem Griffelement (2) und einem Bodenelement (3), wird vorgeschlagen, dass an dem Bodenelement (3) eine Mehrzahl an flachen Frittiergutauflagen (4) angeordnet sind, und dass die Frittiergutauflagen (4) mit dem Bodenelement (3) in einer Frittierposition jeweils einen Winkel im Bereich von 30° bis 90° einschließen.

## Beschreibung

Die Erfindung betrifft einen Einsatz für eine Fritteuse gemäß dem Oberbegriff des Patentanspruches 1.

Es sind Einsätze für Fritteusen bekannt, welche als korbförmige Käfige ausgebildet sind. Derartige Einsätze werden auch als Frittierkörbe bezeichnet. Diese Einsätze erleichtern das Einbringen und Herausnehmen von Frittiergut in oder aus einer Fritteuse. Beim Frittieren schwimmt das Frittiergut üblicherweise auf dem Frittiermittel auf. Hierbei ist darauf zu achten, dass bei einem flächigen Frittiergut, wie beispielsweise einem Schnitzel, einem Cordon Bleu oder panierten Filets die Frittiergüter beim Frittieren nicht übereinander liegen, da das unten liegende Frittiergut gegen das oben liegende Frittiergut drückt und an der flächigen Kontaktstelle der Frittiervorgang nur ungenügend erfolgt und/oder die Frittiergüter miteinander verkleben.

Nachteilig daran ist, dass insbesondere bei einem flächigen Frittiergut die Aufnahmekapazität einer Fritteuse bei wenigen Stück des Frittiergutes bereits ausgeschöpft ist, sodass für eine hohe Anzahl an zu frittierenden Frittiergütern eine entsprechend hohe Anzahl an Frittiervorgängen oder Fritteusen notwendig ist. Damit verbunden ist auch ein entsprechend hoher Energieverbrauch sowie eine entsprechend hohe Menge an verbrauchtem Frittiermittel, was nachteilig für die Umwelt ist. Weiters ist der Arbeitsaufwand bei derartigen Frittiergütern höher, da diese oftmals zumindest einmal zu wenden sind, um ein an beiden Seiten gleichmäßiges Frittierergebnis zu erlangen.

Aufgabe der Erfindung ist es daher einen Einsatz der eingangs genannten Art anzugeben, mit welchem die genannten Nachteile vermieden werden können, mit welchem eine höhere Anzahl an Frittiergütern mit hoher Qualität aber weniger Aufwand und kürzerer Zeit frittiert werden können.

Erfindungsgemäß wird dies durch die Merkmale des Patentanspruches 1 erreicht.

Dadurch ergibt sich der Vorteil, dass eine höhere Anzahl an Frittiergütern auf einmal in einer Fritteuse frittiert werden können, wobei die Qualität des Frittiervorganges hoch bleibt. Durch die Frittiergutauflagen kann das Frittiergut schräg bis senkrecht in die Fritteuse eingebracht werden, sodass das Volumen der Fritteuse besser genutzt werden kann. Dadurch wird der Energiebedarf und der Verbrauch an Frittiermittel erheblich verringert. Dabei bleiben die einzelnen Frittiergüter zuverlässig voneinander getrennt, sodass diese nicht an einer Kontaktfläche aneinander kleben. Weiters ist das Frittiergut dadurch von allen Seiten von dem Frittiermittel umgeben, sodass ein Wenden des Frittiergutes während des Frittiervorganges nicht erforderlich ist. Dadurch wird einerseits der Arbeitsaufwand beim Frittieren verringert, sowie die benötigte Zeit. Dadurch nimmt das Frittiergut weniger Fett beim Frittieren auf, wodurch dieses gesünder wird. Weiters wird durch die üblichen Konvektionsströmungen in der Fritteuse das Frittiermittel gleichmäßig an der Oberfläche der Frittiergüter vorbeigeführt, sodass der Frittiervorgang noch gleichmäßiger erfolgt. Dadurch kann kürzer und mit einer niedrigeren Temperatur als üblich frittiert werden, wodurch die Entstehung von schädlichen Acrylamiden verhindert wird.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich eine bevorzugte Ausführungsform beispielhaft dargestellt ist, näher beschrieben. Dabei zeigt:
Fig. 1 eine bevorzugte Ausführungsform des Einsatzes als schematische Darstellung in Seitenansicht; und
Fig. 2 ein Teil der bevorzugten Ausführungsform des Einsatzes als schematische Darstellung in Draufsicht.

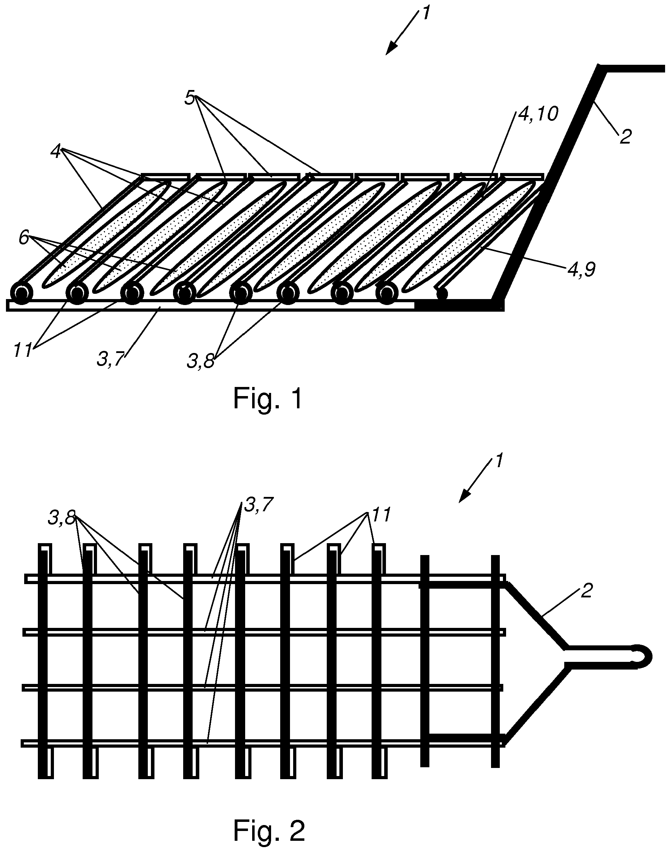

Die Fig. 1 und 2 zeigen zumindest Teile eines Einsatzes 1 für eine Fritteuse mit zumindest einem Griffelement 2 und einem Bodenelement 3. Der Einsatz 1 ist dazu vorgesehen mit Frittiergütern 6 bestückt in eine Fritteuse eingebracht zu werden. Die Fritteuse ist dabei ein Gerät zum Frittieren von Lebensmitteln. Die Fritteuse weist dabei ein beheizbares, mit dem Frittiermittel zu befüllendes Becken auf. Der Einsatz 1 ist dazu vorgesehen, in dieses Becken eingebracht zu werden. Das Frittiermittel, auch oftmals als Frittüre bezeichnet, kann ein Öl oder ein Fett sein.

Der Einsatz 1 weist ein Griffelement 2 auf, mit welchem der Benutzer den Einsatz auch greifen kann, wenn dieser größtenteils in dem Becken der Fritteuse angeordnet ist. Weiters weist der Einsatz 1 ein Bodenelement 3 auf, welches beim Frittiervorgang die Unterseite des Einsatzes bildet. Das Bodenelement 3 kann insbesondere gitterförmig ausgebildet sein, und insbesondere Längsstäbe 7, und quer zu den Längsstäben 7 angeordnete Querstäbe 8, aufweisen.

Vorgesehen ist, dass an dem Bodenelement 3 eine Mehrzahl an flachen Frittiergutauflagen 4 angeordnet sind, und dass die Frittiergutauflagen 4 mit dem Bodenelement 3 in einer Frittierposition jeweils einen Winkel im Bereich von 30° bis 90° einschließen. Auf den flachen Frittiergutauflagen 4 kann das Frittiergut 6, insbesondere ein flaches Frittiergut 6 wie Schnitzel oder Filets, aufgelegt werden. Die Frittiergutauflagen 4 weisen in der Frittierposition, also jener Position, in welcher der Frittiervorgang erfolgt, jeweils einen Winkel im Bereich von 30° bis 90° zu dem Bodenelement 3 auf. Die einzelnen Frittiergutauflagen 4 bildet dabei eine obere Grenze für das darunter liegende Frittiergut, als auch eine untere Grenze für das darüber liegende Frittiergut aus. Die Frittiergutauflagen 4 bilden dadurch eine Reihe von durch die Frittiergutauflagen 4 getrennten Käfigen aus, in welchen die Frittiergüter 6 schräg bis senkrecht frittiert werden können.

Dadurch ergibt sich der Vorteil, dass eine höhere Anzahl an Frittiergütern 6 auf einmal in einer Fritteuse frittiert werden können, wobei die Qualität des Frittiervorganges hoch bleibt. Durch die Frittiergutauflagen 4 kann das Frittiergut 6 schräg bis senkrecht in die Fritteuse eingebracht werden, sodass das Volumen der Fritteuse besser genutzt werden kann. Dadurch wird der Energiebedarf und der Verbrauch an Frittiermittel erheblich verringert. Dabei bleiben die einzelnen Frittiergüter 6 zuverlässig voneinander getrennt, sodass diese nicht an einer Kontaktfläche aneinander kleben. Weiters ist das Frittiergut 6 dadurch von allen Seiten von dem Frittiermittel umgeben, sodass ein Wenden des Frittiergutes 6 während des Frittiervorganges nicht erforderlich ist. Dadurch wird einerseits der Arbeitsaufwand beim Frittieren verringert, sowie die benötigte Zeit. Dadurch nimmt das Frittiergut 6 weniger Fett beim Frittieren auf, wodurch dieses gesünder wird. Weiters wird durch die üblichen Konvektionsströmungen in der Fritteuse das Frittiermittel gleichmäßig an der Oberfläche der Frittiergüter 6 vorbeigeführt, sodass der Frittiervorgang noch gleichmäßiger erfolgt. Dadurch kann kürzer und mit einer niedrigeren Temperatur als üblich frittiert werden, wodurch die Entstehung von schädlichen Acrylamiden verhindert wird.

Der Einsatz 1 kann weiters einen, zumindest seitlich angeordneten Käfig aufweisen, damit größere Rückstände des Frittiergutes 4 nicht in der Fritteuse verbleiben.

Weiters kann der Einsatz 1 eine Einhängevorrichtung zum Einhängen des Einsatzes 1 an der Fritteuse aufweisen.

Der Einsatz 1 ist weiters zur Verwendung einer Fritteuse im Chargenbetrieb vorgesehen, wobei der Einsatz 1 abgesehen vom Einbringen und Entnehmen bewegungslos in der Fritteuse angeordnet ist.

Der Einsatz 1 kann insbesondere aus Edelstahl ausgebildet sein.

Der Einsatz 1 kann insbesondere mindestens vier, bevorzugt mindestens acht, besonders bevorzugt mindestens zwölf, Frittiergutauflagen 4 aufweisen. In Fig. 1 ist eine bevorzugte Ausführungsform mit neun Frittiergutauflagen 4 für acht Frittiergüter 6 abgebildet.

Der Einsatz kann weiters maximal zwanzig, insbesondere maximal sechzehn, Frittiergutauflagen 4 aufweisen. Dadurch hat das Frittiergut 6 weiterhin ausreichend Platz zum Frittieren.

Bevorzugt kann vorgesehen sein, dass die Frittiergutauflagen 4 mit dem Bodenelement 3 in der Frittierposition jeweils einen Winkel bis maximal 55°, insbesondere maximal 50°, einschließen. Hierbei hat sich gezeigt, dass in diesem Bereich des Winkels die Qualität des Frittiergutes 4 nach dem Frittieren besonders gut und saftig ist, während bei steileren Winkeln das Frittiergut 4 dazu neigt zu trocken zu werden. Weiters ist dadurch das Auflegen des Frittiergutes 4 einfacher, da es weniger wahrscheinlich nach unten abrutscht.

Insbesondere kann vorgesehen sein, dass die Frittiergutauflagen 4 mit dem Bodenelement 3 in der Frittierposition jeweils einen Winkel von minimal 35°, insbesondere minimal 40°, einschließen. Durch diesen Winkel sind die Frittiergüter 6 besser voneinander beabstandet, und es können sich besser Konvektionsströme zwischen den Frittiergütern 6 ausbilden.

Bevorzugt kann vorgesehen sein, dass die Frittiergutauflagen 4 im Wesentlichen als Auflagegitter ausgebildet sind. Dadurch kann das Frittiermittel von allen Seiten gut an das Frittiergut 6 gelangen.

Besonders bevorzugt kann vorgesehen sein, dass zumindest eine der Frittiergutauflagen 4 einen mäanderfömig gebogenen Stab aufweist. Insbesondere ist die zumindest eine Frittiergutauflage 4 vorwiegend durch einen einzelnen mäanderfömigen gebogenen Stab ausgebildet. Bevorzugt weist zumindest eine Mehrzahl der Frittiergutauflagen 4 einen mäanderfömig gebogenen Stab auf. Der mäanderfömig gebogene Stab weist insbesondere mehrere parallel zueinander verlaufende erste Stababschnitte auf, wobei die ersten Stababschnitte alternierend an der Oberseite oder Unterseite mit dem benachbarten ersten Stababschnitt verbunden sind. Die ersten Stababschnitte sind insbesondere im Wesentlichen orthogonal zu einer Kippachse der jeweiligen Frittiergutauflage 4 angeordnet. Dadurch kann sich besonders gut eine, entlang des Frittiergutes 6 verlaufende Konvektion des Frittiermittels ausbilden, da diese Konvektion kaum durch Querverbindungen der Frittiergutauflage 4 gehindert wird.

Weiters kann vorgesehen sein, dass die Frittiergutauflagen 4 in der Frittierposition im Wesentlichen parallel zueinander angeordnet sind. Dadurch kann der verfügbare Platz in der Fritteuse optimal genutzt werden.

Insbesondere kann vorgesehen sein, dass die Frittiergutauflage 4 unabhängig voneinander bewegbar angeordnet sind.

Besonders bevorzugt kann vorgesehen sein, dass zumindest eine Mehrzahl der Frittiergutauflagen 4 gelenkig mit dem Bodenelement 3 verbunden sind. Der Begriff zumindest eine Mehrzahl der Frittiergutauflagen 4 bedeutet hierbei, dass zumindest eine erste Frittiergutauflage 4, 9 auch fest angeordnet sein kann, während die restlichen Frittiergutauflagen 4 gelenkig mit dem Bodenelement 3 verbunden sind. Dadurch kann das Einbringen und Entfernen der Frittiergüter 6 wesentlich einfacher erfolgen. Hierbei kann an einem Anfang eines Bestückungsvorganges zunächst sämtliche Frittiergutauflagen 4 von der ersten Frittiergutauflage 4, 9 weggeklappt werden, sodass ein Frittiergut 6 einfacher auf die erste Frittiergutauflage 4, 9 aufgelegt werden kann. Dann wird die, zu der ersten Frittiergutauflage 4, 9 unmittelbar benachbarte zweite Frittiergutauflage 4, 10 in die Frittierposition geklappt, und ein weiters Frittiergut 6 auf die zweite Frittiergutauflage 4 aufgelegt. Anschließend wird die nächste Frittiergutauflage 4 in die Frittierposition geklappt und der Vorgang für die erforderliche Anzahl an Frittiergütern 6 wiederholt. Die letzte Frittiergutauflage 4 kann hierbei lediglich dazu vorgesehen sein das darunter liegende Frittiergut 6 zu halten.

Hierbei können die Frittiergutauflagen 4 jeweils über ein Gelenk 11 mit dem Bodenelement 3, insbesondere den Querstäben 8 des Bodenelementes 3, verbunden sein.

Die Frittiergutauflagen 4 können insbesondere vorgebbar lösbar mit dem Bodenelement 3 verbunden sein. Hierbei können die Frittiergutauflagen 4 insbesondere über einen Klippverschluss verfügen, mit welchem die Frittiergutauflagen 4 auf das Bodenelement 3 angeklippt werden können. Dadurch wird die Reinigung des Einsatzes 1 vereinfacht. Weiters können dadurch die Abstände zwischen den Gelenken 11 vorgebbar verändert werden, wobei das Bodenelement 3 einen Raster ausbildet.

Alternativ kann vorgesehen sein, dass die Frittiergutauflagen 4 unlösbar mit dem Bodenelement 3 verbunden sind.

Die Gelenke 11 können insbesondere einen Abstand von 2 bis 5 cm zu einem benachbarten Gelenk 11 aufweisen.

In der Fig. 2 ist das Bodenelement 3 der bevorzugten Ausführungsform des Einsatzes 11 dargestellt, wobei die Frittiergutauflagen 4 bis auf die Gelenke 11 zum Zwecke der besseren Übersichtlichkeit weggelassen wurden.

In den Fig. 1 und 2 wurden weiters nicht alle Merkmale mit Bezugszeichen versehen.

Bevorzugt ist vorgesehen, dass die Frittiergutauflagen 4 an einer, dem Bodenelement 3 gegenüberliegenden Seite eine Rückhaltevorrichtung 5 für ein Frittiergut 6 aufweisen. Die Rückhaltevorrichtung 5 bildet hierbei eine obere Grenze der durch die Frittiergutauflagen 4 gebildeten Käfige aus, wodurch die beim Frittieren aufschwimmenden Frittiergüter 6 nicht nach oben entweichen können.

Die Rückhaltevorrichtung 5 kann insbesondere als ein, gegenüber der restlichen Frittiergutauflage 4 abgewinkeltes Gittersegment ausgebildet sein.

Besonders bevorzugt kann vorgesehen sein, dass die Rückhaltevorrichtung 5 als Abstandhalter zwischen den Frittiergutauflagen 4 ausgebildet ist. Hierbei liegt die Rückhaltevorrichtung 5 der zweiten Frittiergutauflage 4,10 in der Frittierposition auf der ersten Frittiergutauflage 4,9 auf, sodass sich der konkrete Winkel zwischen der zweiten Frittiergutauflage 4,10 und dem Bodenelement 3 automatisch ergibt. Dieses Prinzip ist in Fig. 1 dargestellt, wo die Rückhaltevorrichtung 5 der einzelnen Frittiergutauflagen 4 jeweils auf der vorangehenden Frittiergutauflage 4 aufliegen, und sich dadurch eine stabile Anordnung der beweglichen Frittiergutauflagen 4 ergibt.

Alternativ kann vorgesehen sein, dass die zumindest Mehrzahl der Frittiergutauflagen 4 gelenkig mit einer gemeinsamen und parallel zu dem Bodenelement 3 verlaufenden Verbindungsstange verbunden sind, sodass bei einer Bewegung der Verbindungsstange sämtliche mit der Verbindungsstange verbundenen Frittiergutauflagen 4 gemeinsam bewegt werden.

Weiters kann vorgesehen sein, dass der Einsatz 1 eine Einstelleinrichtung zur Einstellung des Winkels zwischen dem Bodenelement 3 und den Frittiergutauflagen 4 in der Frittierposition aufweist. Hierbei hat sich gezeigt, dass die Winkel zwischen dem Bodenelement 3 und den Frittiergutauflagen 4 in der Frittierposition einen Einfluss auf das Ergebnis des Frittierprozesses hat, wodurch je nach zuzubereitenden Speise ein unterschiedlicher Winkel vorzuziehen ist. Durch die Einstelleinrichtung kann der Winkel dabei je nach Bedarf eingestellt werden, um derart das Frittierergebnis zu verbessern.

Die Einstelleinrichtung kann insbesondere an der Frittiergutauflage 4,9 ausgebildet sein, so dass der Winkel der ersten Frittiergutauflage 4,9 vorgebbar ist. Dies kann insbesondere durch ein entsprechendes Raster erfolgen. Der Winkel anderen Frittiergutauflage 4 ist durch die als Abstandhalter ausgebildete Rückhaltevorrichtung 5 von dem Winkel der ersten Frittiergutauflage 4,9 abhängig, so dass eine Vorgabe des Winkels der ersten Frittiergutauflage 4,9 ausreichend ist, um den Winkel zwischen dem Bodenelement 3 und den restlichen Frittiergutauflagen 4 vorzugeben.

Alternativ kann die Einstelleinrichtung direkt an den Gelenken 11 der Frittiergutauflagen 4 ausgebildet sein.

## Patentansprüche

1. Einsatz (1) für eine Fritteuse mit zumindest einem Griffelement (2) und einem Bodenelement (3), **dadurch gekennzeichnet, dass** an dem Bodenelement (3) eine Mehrzahl an flachen Frittiergutauflagen (4) angeordnet sind, und dass die Frittiergutauflagen (4) mit dem Bodenelement (3) in einer Frittierposition jeweils einen Winkel im Bereich von 30° bis 90° einschließen.

2. Einsatz (1) nach Anspruch 1, **dadurch gekennzeichnet, dass** die Frittiergutauflagen (4) mit dem Bodenelement (3) in der Frittierposition jeweils einen Winkel bis maximal 55°, insbesondere maximal 50°, einschließen.

3. Einsatz (1) nach Anspruch 1 oder 2, **dadurch gekennzeichnet, dass** die Frittiergutauflagen (4) mit dem Bodenelement (3) in der Frittierposition jeweils einen Winkel von minimal 35°, insbesondere minimal 40°, einschließen.

4. Einsatz (1) nach einem der Ansprüche 1 bis 3, **dadurch gekennzeichnet, dass** die Frittiergutauflagen (4) im Wesentlichen als Auflagegitter ausgebildet sind.

5. Einsatz (1) nach einem der Ansprüche 1 bis 4, **dadurch gekennzeichnet, dass** die Frittiergutauflagen (4) in der Frittierposition im Wesentlichen parallel zueinander angeordnet sind.

6. Einsatz (1) nach einem der Ansprüche 1 bis 5, **dadurch gekennzeichnet, dass** zumindest eine Mehrzahl der Frittiergutauflagen (4) gelenkig mit dem Bodenelement (3) verbunden sind.

7. Einsatz (1) nach einem der Ansprüche 1 bis 6, **dadurch gekennzeichnet, dass** die Frittiergutauflagen (4) an einer, dem Bodenelement (3) gegenüberliegenden Seite eine Rückhaltevorrichtung (5) für ein Frittiergut (6) aufweisen.

8. Einsatz (1) nach Anspruch 7, **dadurch gekennzeichnet, dass** die Rückhaltevorrichtung (5) als Abstandhalter zwischen den Frittiergutauflagen (4) ausgebildet ist.

9. Einsatz (1) nach einem der Ansprüche 1 bis 8, **dadurch gekennzeichnet, dass** der Einsatz (1) eine Einstelleinrichtung zur Einstellung des Winkels zwischen dem Bodenelement (3) und den Frittiergutauflagen (4) in der Frittierposition aufweist.

10. Einsatz (1) nach einem der Ansprüche 1 bis 9, **dadurch gekennzeichnet, dass** zumindest eine der Frittiergutauflagen (4) einen mäanderfömig gebogenen Stab aufweist.
